# EUROPÄISCHE PATENTSCHRIFT

(11) **EP 4 221 942 B1**
(45) Veröffentlichungstag und Bekanntmachung des Hinweises auf die Patenterteilung: **21.05.2025**
(21) Anmeldenummer: 21773735.2
(22) Anmeldetag: 07.09.2021
(51) Int. Cl.: B25F 5/02, B25F 5/00

(54) **HALTEEINRICHTUNG ZUR ANORDNUNG AN EINEM AKKUPACK EINER WERKZEUGMASCHINE**
HOLDING DEVICE FOR ARRANGEMENT ON A BATTERY PACK OF A MACHINE TOOL
DISPOSITIF DE RETENUE DESTINÉ À ÊTRE DISPOSÉ SUR UN BLOC-BATTERIE D'UNE MACHINE-OUTIL

(30) Priorität: 29.09.2020 DE 102020125435
(43) Veröffentlichungstag der Anmeldung: 09.08.2023
(73) Patentinhaber: Festool GmbH, 73240 Wendlingen am Neckar (DE)
(72) Erfinder: STRAUB, Benjamin, 73329 Kuchen (DE)
(74) Vertreter: Maiwald GmbH
(86) Internationale Anmeldenummer: PCT/EP2021/074561
(87) Internationale Veröffentlichungsnummer: WO 2022/069161

(56) Entgegenhaltungen:
- EP-A1- 2 998 074
- CA-A1- 2 076 227
- DE-B3- 102018 104 342
- US-A- 5 810 525
- US-A1- 2002 110 431
- US-A1- 2005 069 391
- US-A1- 2007 227 310
- US-A1- 2016 167 219
- US-A1- 2020 055 176

## Beschreibung

Die Erfindung betrifft eine Halteeinrichtung zur Anordnung an einem Akkupack einer Werkzeugmaschine gemäß Anspruch 1. Zudem betrifft die Erfindung einen Akkupack sowie eine Werkzeugmaschine mit den Merkmalen der nebengeordneten Ansprüche.

Derartige Akkupacks und Werkzeugmaschinen sind aus dem Stand der Technik bekannt, bspw. aus DE 10 2004 003 531 A1. Darin ist ein Akkuschrauber beschrieben, der mittels eines Akkupacks mit Energie versorgt werden kann. Mittels eines mit der Antriebswelle koppelbaren Schrauber-Bits kann der Akkuschrauber je nach Drehrichtung der Antriebswelle bspw. Schrauben einschrauben und ausschrauben. Benötigte Schrauber-Bits müssen bspw. in einer Werkzeugkiste separat mitgeführt und bei Bedarf mit der Antriebswelle gekoppelt werden.

Ein weiterer Akkuschrauber ist aus DE 20 2004 000 749 U1 bekannt. Dieser Akkuschrauber weist an der Vorderseite des Maschinengehäuses Haltenuten auf, in denen Schrauber-Bits aufbewahrt und bei Bedarf entnommen werden können. Somit können Schrauber-Bits direkt am Akkuschrauber mitgeführt werden. Allerdings ist das Mitführen von Schrauber-Bits auf diesen Akkuschrauber begrenzt. Wird eine weitere Werkzeugmaschine eingesetzt, die Schrauber-Bits benötigt, ist auch dort ein separates Mitführen von Schrauber-Bits oder ein Einwechseln von Schrauber-Bits von diesem Akkuschrauber erforderlich. Somit besteht Optimierungsbedarf.

Ferner ist aus der US 2002/0110431 A1 eine Zubehörschale für Handwerkzeugmaschinen bekannt geworden.

In der US 2020/0055176 A1 geht es um das Befestigen von Bohrern, Schraub-Bits und/oder weiterer Bauteile an einer Handwerkzeugmaschine und es offenbart den Oberbegriff des Anspruches 1.

Andere Beispiele von Halteeinrichtungen sind aus der US 2005/069391 A1, US 2007/227310 A1, EP 2 998 074 A1, US 2016/167219 A1 oder CA 2 076 227 A1 bekannt.

Der Erfindung liegt die Aufgabe zugrunde, bei Werkzeugmaschinen die Handhabung von Werkzeugen wie bspw. Schrauber-Bits mit einfachen konstruktiven Mitteln zu vereinfachen.

Die Erfindung löst diese Aufgabe durch eine Halteeinrichtung mit den Merkmalen des Anspruchs 1. Die Halteeinrichtung zur Anordnung an einem Akkupack einer Werkzeugmaschine, insbesondere einer Handwerkzeugmaschine, weist mindestens eine Aufnahme (eine oder mehrere Aufnahmen) zum Halten eines Werkzeugs, Zubehörteils oder Verbrauchsmittels oder mehrerer Werkzeuge, Zubehörteile oder Verbrauchsmittel für die Werkzeugmaschine auf.

Dadurch können das oder die Werkzeuge, Zubehörteile oder Verbrauchsmittel (nachfolgend teilweise als "Komponente" bezeichnet) mittels der Halteeinrichtung am Akkupack befestigt werden. So können eine oder mehrere Komponenten in der oder den Aufnahmen eingesetzt und gehalten und bei Bedarf daraus entnommen werden (entnehmbare Aufnahme bzw. entnehmbares Halten). Somit ist die Komponente für den Anwender direkt verfügbar, und zwar auch dann, wenn der Akkupack an mehreren Werkzeugmaschinen verwendet wird. Egal an welcher Werkzeugmaschine der Anwender den Akkupack einsetzt, steht ihm die in der Halteeinrichtung angeordnete Komponente zur Verfügung. Der Werkzeugeinsatz und der Werkzeugwechsel können erleichtert werden.

Die Halteeinrichtung kann auch als Werkzeughalteeinrichtung bezeichnet werden. Die Aufnahme kann sich entlang einer Längsrichtung erstrecken. Bei dem Werkzeug kann es sich um ein längliches Schraub- oder Bohrwerkzeug (Schraubeinsatz (Bit) oder Bohrer), ein Sägeblatt (für eine Stichsäge), um eine Schraube, einen Nagel und/oder dgl. handeln. Die Aufnahme ist vorzugsweise zur Aufnahme von einem oder mehreren der genannten Komponenten eingerichtet und/oder bestimmt.

Bei der Werkzeugmaschine kann es sich insbesondere um eine Handwerkzeugmaschine (bspw. handgeführtes Elektrowerkzeug) handeln. Die Werkzeugmaschine kann durch einen Akkupack netzunabhängig mit elektrischer Energie versorgt werden.

Erfindungsgemäß ist die Halteeinrichtung auf den Akkupack aufsetzbar und reversibel vom Akkupack abnehmbar ausgebildet, wobei die Halteeinrichtung dazu ausgebildet ist, den Akkupack im aufgesetzten Zustand zumindest teilweise zu umgeben. Somit kann die Halteeinrichtung bei Bedarf auf den Akkupack aufgesetzt und von diesem abgenommen werden. Bei der Halteeinrichtung handelt es sich somit um ein bezogen auf das Akkupack separates Element, durch welches der Akkupack bei aufgesetzter Halteeinrichtung zumindest abschnittsweise geschützt werden kann. Somit kann die Halteeinrichtung als Schutzabdeckung für den Akkupack ausgebildet sein. Auch bei mehreren Akkupacks ist eine Halteeinrichtung ausreichend, da die Halteeinrichtung auf das Akkupack aufgesetzt werden kann, welches gerade verwendet wird.

Erfindungsgemäß weist die Halteeinrichtung einen Basisabschnitt und vom Basisabschnitt abragende Wandabschnitte auf. Somit kann die Halteeinrichtung als aufschiebbare Abdeckung oder aufschiebbarer "Schuh" ausgebildet sein. Der Basisabschnitt dient zur Abdeckung des Akkupacks an einer von der Kupplungsseite des Akkupacks, an der sich eine Kupplungseinrichtung zum mechanischen und elektrischen Verbinden des Akkupacks mit der Werkzeugmaschine befindet, abgewandten Seite des Akkupacks (Unterseite). Somit kann der Akkupack an der von der Kupplungsseite abgewandten Seite (Unterseite) und an den Mantelseiten geschützt werden.

Gemäß einer erfindungsgemäßen Alternative ist die Halteeinrichtung teilweise oder vollständig aus einem Elastomer, insbesondere aus einem thermoplastischen Elastomer, ausgebildet. Dadurch kann eine beständige Ausgestaltung erreicht werden. Das Material ist einfach zu verarbeiten und zudem hinreichend elastisch. Dies begünstigt ein Anbringen der Halteeinrichtung am und ein Abnehmen der Halteeinrichtung vom Akkupack.

Gemäß einer weiteren erfindungsgemäßen Alternative weist die Halteeinrichtung einen Überzug aus einem weichen Material, insbesondere einen Überzug aus Gummi, auf. Dadurch kann ein Fallschutz erreicht werden. Das Risiko von Schäden am oder im Akkupack kann verringert werden, da Beschleunigungen reduziert werden.

In vorteilhafter Weise kann die Aufnahme als Haltenut oder als Aufnahmekanal ausgebildet sein. Somit ist mit einfachen konstruktiven Mitteln eine stabile Aufnahme geschaffen. Die Haltenut dient zur entnehmbaren Aufnahme des Werkzeugs, Zubehörteils oder Verbrauchsmittels. Die Haltenut ist an ihrer (vom Nutgrund abgewandten) Außenseite offen ausgebildet, d.h. für eine einzubringende Komponente von außen zugänglich. Der Aufnahmekanal kann einen elliptischen kreisrunden Querschnitt aufweisen, der an zumindest einem Ende offen und zu den Seiten hin durch eine vorzugsweise umlaufende Wandung verschlossen ist (ähnlich einer Bohrung). Somit kann ein Werkzeug, bspw. ein Bit, in den Aufnahmekanal eingebracht und bei Bedarf wieder aus diesem entnommen werden.

Im Konkreten kann der Nutquerschnitt (Werkzeugaufnahmeraum) der Haltenut durch einen Nutgrund sowie durch mindestens eine seitliche Wandung, insbesondere durch zwei seitliche (den Nutgrund zwischen sich einfassende und ggf. vom Nutgrund ausgehende) Wandungen begrenzt sein.

Der Nutquerschnitt der Haltenut ist zur Aufnahme der oben genannten Komponenten eingerichtet und/oder bestimmt. Ist eine Komponente in der Haltenut angeordnet, kann diese aus dem Nutquerschnitt teilweise herausragen (Komponente teilweise im Nutquerschnitt aufgenommen) oder vollständig im Nutquerschnitt aufgenommen sein. Die Haltenut kann bspw. mantelseitig an der Halteeinrichtung bzw. am Akkupack angeordnet sein, insbesondere an einer Stirnseite oder einer Längsseite.

In zweckmäßiger Weise können die mindestens eine oder die zwei seitlichen Wandungen (bspw. relativ zum Nutgrund) elastisch verformbar ausgebildet sein, so dass diese beim Einbringen des Werkzeugs, Zubehörteils oder Verbrauchsmittels in die Haltenut durch das Werkzeug, Zubehörteil oder Verbrauchsmittel elastisch verformt werden und die jeweilige Komponente in der Haltenut halten. Dadurch kann die Komponente kraftschlüssig in der Haltenut gesichert werden, da die (durch die Komponente) mindestens eine verformte Wandung eine Kraft auf die Komponente ausübt. Somit kann die Komponente durch die mindestens eine Wandung in der Haltenut geklemmt sein.

Optional können an der mindestens einen seitlichen Wandung Hintergriffsabschnitte oder Schnapphaken ausgebildet sein, die mit der in der Haltenut angeordneten Komponente zusammenwirken. Alternativ oder ergänzend können an den seitlichen Wandungen der Haltenut Elastomerelemente angeordnet sein oder die Wandungen können als Elastomerelemente ausgebildet sein, mit denen eine in der Haltenut angeordnete Komponente (von der Außenseite her) hintergriffen werden kann. Dies begünstigt eine Sicherung der Komponente in der Haltenut.

Im Rahmen einer bevorzugten Ausgestaltung kann die Halteeinrichtung das Akkupack zumindest teilweise bedecken und/oder in das Akkupack integriert sein. Die Halteeinrichtung kann das Akkupack zumindest teilweise bedecken, bspw. indem das Halteeinrichtung als Gehäuseabschnitt oder Teil eines Gehäuseabschnitts bzw. einer Gehäuseabdeckung des Akkupacks ausgebildet ist. Die Halteeinrichtung kann derart in das Akkupack integriert sein, dass diese, bspw. an einer Stirnseite oder einer Längsseite, aus dem Akkupack herausragt, wobei der Gehäuseabschnitt bzw. die Gehäuseabdeckung des Akkupacks im Bereich der Halteeinrichtung bzw. der Aufnahme ausgespart ist.

In vorteilhafter Weise können die Wandabschnitte stirnseitige Wandabschnitte und längsseitige Wandabschnitte umfassen, die die stirnseitigen Wandabschnitte miteinander verbinden. Dadurch kann das Akkupack stirnseitig und längsseitig vor Umgebungseinflüssen geschützt werden, zumindest abschnittsweise.

In zweckmäßiger Weise kann an den längsseitigen Wandabschnitten jeweils eine Aussparung ausgebildet sein. Dadurch können Bedienelemente (bspw. eine Taste zum Lösen einer Verriegelung des Akkupacks) oder eine Beschriftungsfläche (Informationen wie bspw. technische Daten des Akkupacks) freigegeben werden.

Im Rahmen einer bevorzugten Ausgestaltung können an einer Längsseite oder an beiden Längsseiten der Halteeinrichtung, insbesondere am Basisabschnitt, jeweils eine (längsseitige) Aufnahme zum Halten eines Werkzeugs, Zubehörteils oder Verbrauchsmittels ausgebildet sein. Damit ist an der Längsseite eine Aufnahme geschaffen, die zur Längsseite hin offen ist. Somit ist für einen Anwender direkt erkennbar, ob eine Komponente in dieser Aufnahme angeordnet ist. Zudem ist diese Aufnahme für einen Anwender auch dann zugänglich, wenn die Halteeinrichtung, ggf. mit darin aufgenommenem Akkupack, bspw. mit der Unterseite auf dem Untergrund abgelegt ist.

Optional können an einem Ende oder an beiden Enden der Aufnahme jeweils ein ansteigender Abschnitt ausgebildet sein, in dem die Tiefe der Aufnahme bzw. der Haltenut jeweils zu deren Ende hin abnimmt. Dies erleichtert eine Entnahme des Werkzeugs, Zubehörteils oder Verbrauchsmittels, da die Komponente durch Verlagern entlang der Längsrichtung der Aufnahme bzw. der Haltenut auf den ansteigenden Abschnitt trifft, wobei die Komponente in eine schräg aus der Aufnahme bzw. der Haltenut ragende Stellung gelangt.

In vorteilhafter Weise können am Nutgrund, im Nutgrund oder angrenzend an den Nutgrund, insbesondere im Basisabschnitt, und/oder an den seitlichen Wandungen jeweils ein oder mehrere Permanentmagnete angeordnet sein. Somit können die Komponente oder Komponenten, ggf. zusätzlich, mittels Magnetkraft gehalten werden. Dies optimiert die Fixierung der Komponenten an der Halteeinrichtung. Es können unterschiedliche Komponenten gehalten werden. An den genannten Stellen kann jeweils ein Magnet angeordnet sein, der sich entlang einer Längsrichtung erstreckt, oder es können mehrere Magnete vorgesehen sein, die sich entlang einer Längsrichtung erstrecken und entlang der Längsrichtung voneinander beabstandet sind.

In zweckmäßiger Weise können an einer (vom Akkupack bzw. vom Aufnahmeraum für den Akkupack abgewandten) Unterseite der Halteeinrichtung, insbesondere an einer Unterseite des Basisabschnitts, mehrere Aufnahmen zum Halten eines Werkzeugs, Zubehörteils oder Verbrauchsmittels ausgebildet sein. Dadurch können an der Unterseite mehrere, ggf. mehrere unterschiedliche, Komponenten aufgenommen werden. Die Aufnahmen können jeweils als Haltenut ausgebildet sein, wie oben beschrieben. Der Nutquerschnitt der Haltenuten kann jeweils durch einen Nutgrund sowie durch zwei seitliche Wandungen (Trennwand) begrenzt sein. Der Nutquerschnitt kann derart dimensioniert sein, dass das Werkzeug vollständig innerhalb des Nutquerschnitts angeordnet ist. Vorzugsweise kann zwischen Komponente und Unterseite der Halteeinrichtung ein Freiraum verbleiben. Dadurch wird ein Ablegen der Halteeinrichtung begünstigt. Verschmutzungen der Komponenten können reduziert werden.

Im Konkreten können die Aufnahmen an der Unterseite (der Halteeinrichtung bzw. des Basisabschnitts) sich jeweils entlang einer Längsrichtung erstrecken und parallel zueinander angeordnet sein, wobei zueinander benachbarte Aufnahmen durch eine Trennwand (seitliche Wandung) voneinander getrennt sind. Dadurch sind mehrere voneinander separate Aufnahmen für Komponenten wie bspw. Werkzeuge geschaffen.

In vorteilhafter Weise können in jeder Trennwand oder in jeder zweiten Trennwand (übernächste Trennwand) jeweils ein oder mehrere Permanentmagnete angeordnet sein. Dadurch kann eine zuverlässige Fixierung der Komponenten bzw. Werkzeuge durch Magnetkraft erreicht werden. Sind nur in jeder zweiten Trennwand Magnete vorgesehen, kann die Anzahl bzw. die Masse an Magneten geringgehalten werden (kostengünstig). In einer Trennwand können ein langer Magnet oder mehrere kürzere Magnete angeordnet sein, die entlang einer Längsrichtung der Trennwand voneinander beabstandet sind. Bei der letztgenannten Variante kann ggf. Magnetmaterial eingespart werden.

In zweckmäßiger Weise können die Aufnahmen an der Unterseite unterschiedlich große Querschnitte (Nutquerschnitte) und/oder unterschiedliche Formen (Nutformen) aufweisen. Hiermit können an der Unterseite unterschiedliche Komponenten oder gleichartige Komponenten unterschiedlicher Größe aufgenommen werden, bspw. ein Sägeblatt einer Stichsäge, ein Schraubeinsatz und/oder ein Bohrer. Dies trägt zu einer flexiblen Anwendung der Halteeinrichtung bei.

Im Rahmen einer bevorzugten Ausgestaltung kann an einer Seite der Halteeinrichtung, bspw. der Unterseite der Halteeinrichtung, insbesondere am Basisabschnitt, ein Durchbruch zur Belüftung des Akkupacks ausgebildet sein. Der Durchbruch kann somit einen Belüftungskanal ausbilden, so dass Wärme vom Akkupack weggeführt werden kann. Bspw. kann die Halteeinrichtung somit beim Laden des Akkupacks an diesem verbleiben. Der Durchbruch kann an den Querschnitt eines im Akkupack ausgebildeten Luftkanals angepasst sein. Der Durchbruch kann im Querschnitt flächig, bspw. im Wesentlichen rechteckig, trapezförmig oder elliptisch ausgebildet sein.

In zweckmäßiger Weise können sich die Aufnahmen an der Unterseite (der Halteeinrichtung bzw. des Basisabschnitts) entlang der Längsrichtung nur über einen Teil der Halteeinrichtung bzw. des Basisabschnitts erstrecken, wobei der Durchbruch außerhalb dieses Teils angeordnet ist (Durchbruch ist in einem nicht mit Aufnahmen versehenen Teil der Halteeinrichtung bzw. des Basisabschnitts angeordnet).

Dies optimiert die Belüftung und trägt damit zu einer guten Wärmeabführung bei. Zudem erleichtert dies die Entnahme eines Werkzeugs aus einer Aufnahmen, da das Werkzeug entlang der Aufnahme zu diesem Teil hingeschoben und gegriffen werden kann.

Vorzugsweise kann die Halteeinrichtung aus einer Hartkomponente und einer Weichkomponente (TPE, Gummi, Elastomer) ausgebildet sein, wobei die Weichkomponente die Hartkomponente (Kunststoff) zumindest teilweise umgibt. Somit kann die Halteeinrichtung ein Kernmaterial ("Hartkomponente") und ein Überzugsmaterial ("Weichkomponente") aufweisen.

Im Rahmen einer bevorzugten Ausgestaltung kann die die Oberfläche der Halteeinrichtung rutschhemmend sein oder die Halteeinrichtung kann einen Überzug aus einem rutschhemmenden Material aufweisen, bspw. aus Gummi. Dies verbessert die Fixierung der Halteeinrichtung am Akkupack. Auch die Fixierung der Werkzeuge in den Aufnahmen kann hiermit optimiert werden.

In vorteilhafter Weise kann die Halteeinrichtung eine Lichtquelle, insbesondere mit einer LED, aufweisen. Somit kann mittels der Halteeinrichtung die Umgebung zumindest abschnittsweise ausgeleuchtet werden. Die Halteeinrichtung kann neben einer Lichtquelle (LED) noch einen elektrochemischen Energiespeicher und ggf. einen Schalter aufweisen.

In zweckmäßiger Weise kann die Halteeinrichtung einen Leitungssucher aufweisen. Hiermit können bspw. in einer Wand angeordnete Elektroleitungen und/oder Wasserleitungen erkannt werden. Dies kann den Anwender bspw. vor einem Bohrvorgang unterstützen.

Im Rahmen einer bevorzugten Ausgestaltung kann die Halteeinrichtung eine Ladeeinrichtung zum elektrischen Laden von mobilen Endgeräten aufweisen. Damit ist eine Energieversorgung mobiler Endgeräte mittels der Halteeinrichtung möglich. Die Halteeinrichtung kann elektrisch mit dem mit der Halteeinrichtung gekoppelten Akkupack verbunden sein oder die Halteeinrichtung kann einen eigenen elektrochemischen Energiespeicher aufweisen. Die Halteeinrichtung kann als (drahtgebundene) Schnittstelle einen USB-Anschluss aufweisen oder als (drahtlose) Schnittstelle zum induktiven Laden ausgebildet sein.

Vorzugsweise kann die Halteeinrichtung eine Kupplungseinrichtung zur Ankopplung von Haltemitteln aufweisen. Damit wird die Handhabung weiter optimiert. So kann die Kupplungseinrichtung zur Ankopplung an einen Gerüsthaken, einen Gürtelclip oder eine Centrotec-Aufnahme ausgebildet sein.

Die eingangs genannte Aufgabe wird auch durch ein Akkupack mit den Merkmalen des nebengeordneten Anspruchs gelöst. Demnach weist das Akkupack eine Halteeinrichtung mit einem oder mehreren der voranstehend beschriebenen Aspekte auf.

Hinsichtlich der damit erzielbaren Vorteile sei auf die diesbezüglichen Ausführungen zur Halteeinrichtung verwiesen.

Zur weiteren Ausgestaltung des Akkupacks können die im Zusammenhang mit der Halteeinrichtung beschriebenen Maßnahmen dienen.

Die eingangs genannten Aufgabe wird auch durch eine Werkzeugmaschine, insbesondere Handwerkzeugmaschine, mit den Merkmalen des weiter nebengeordneten Anspruchs gelöst. Demnach weist die Werkzeugmaschine einen Akkupack und eine Halteeinrichtung mit einem oder mehreren der voranstehend beschriebenen Aspekte auf.

Hinsichtlich der damit erzielbaren Vorteile sei auf die diesbezüglichen Ausführungen zur Halteeinrichtung verwiesen.

Zur weiteren Ausgestaltung der Werkzeugmaschine können die im Zusammenhang mit der Halteeinrichtung beschriebenen Maßnahmen dienen.

Die Erfindung wird im Folgenden anhand der Figuren näher erläutert, wobei gleiche oder funktional gleiche Elemente mit identischen Bezugszeichen versehen sind, ggf. jedoch lediglich einmal. Es zeigen:
- Fig.1: eine Ausführungsform einer in den Akkupack integrierten Halteeinrichtung in einer perspektivischen Ansicht;
- Fig.2: die Halteeinrichtung aus Fig.1 in einer Schnittansicht gemäß einer Achse II - II in Figur 1;
- Fig.3: eine Ausführungsform einer auf den Akkupack aufsetzbaren Halteeinrichtung in einer perspektivischen Ansicht;
- Fig.4: die Halteeinrichtung aus Fig.3 in einer Unteransicht gemäß Pfeil IV in Figur 3;
- Fig.5: die Halteeinrichtung aus Fig.3 in einer Schnittansicht gemäß einer Achse V - V in Figur 4; und
- Fig.6: eine Ausgestaltung der Halteeinrichtung aus Figur 3 mit darin aufgenommenen Sägeblättern in einer Unteransicht.

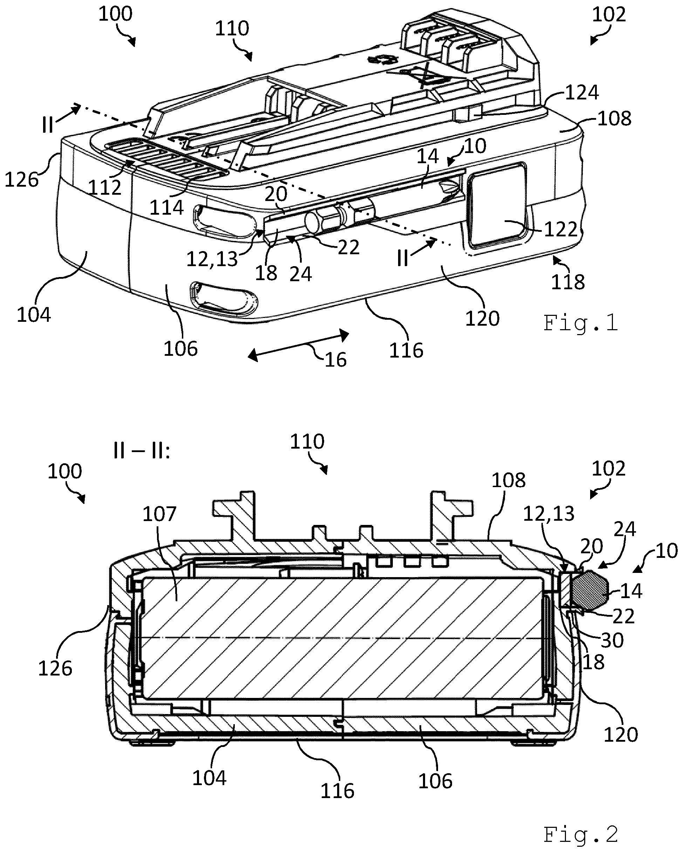

Figur 1 zeigt eine Halteeinrichtung 10 zur Anordnung an einem Akkupack 100 einer Werkzeugmaschine. Zunächst wird der Akkupack 100 beschrieben.

Der Akkupack 100 weist vorliegend ein Gehäuse 102 mit einem ersten Gehäuseabschnitt 104 und einem zweiten Gehäuseabschnitt 106 auf. Die Gehäuseabschnitte 104, 106 sind hier beispielhaft als Gehäusehälften ausgebildet. Die Gehäuseabschnitte 104, 106 sind aneinander befestigt, bspw. aneinander verschraubt. Im Inneren des Gehäuses 102 sind die Komponenten des Akkupacks 100 angeordnet, bspw. die Akkuzellen 107 (vgl. Fig.2).

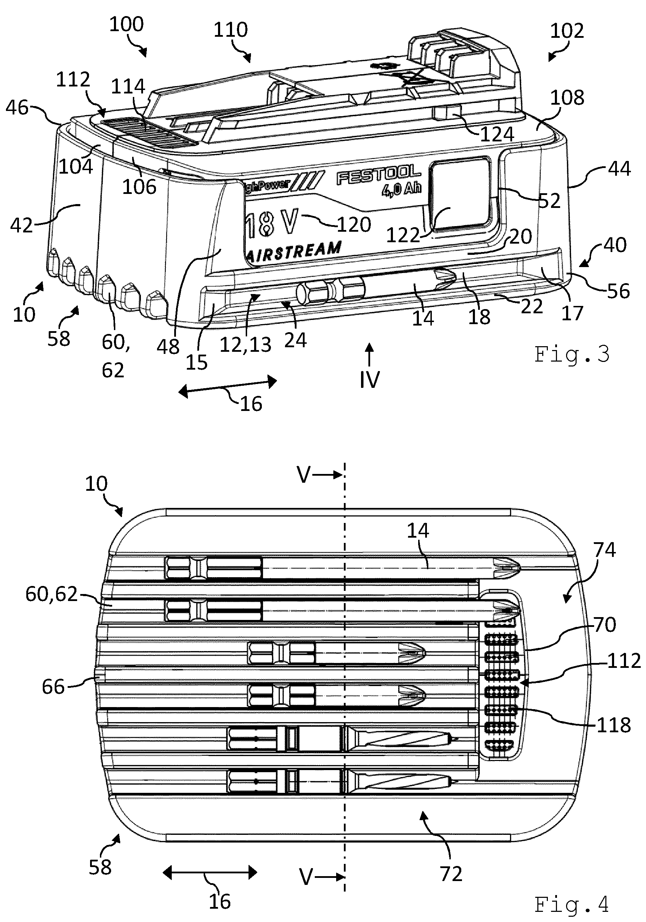

Der Akkupack 100 weist an einer Oberseite 108 (Kupplungsseite 108) eine Kupplungseinrichtung 110 auf, mittels der der Akkupack mit einer Werkzeugmaschine, bspw. einem Akkuschrauber, gekoppelt werden kann. Durch das Gehäuse 102 des Akkupacks 100 hindurch erstreckt sich ein Belüftungskanal 112 zur Kühlung bzw. Belüftung des Akkupacks 100 (vgl. Fig.1). Der Strömungskanal 112 weist an der Oberseite 108 einen Eintritt 114 und an einer Unterseite 116 einen Austritt 118 auf (analog zu Fig.4).

An einer Längsseite 120 weist der Akkupack 100 eine Taste 122 zum Betätigen eines Verriegelungselements 124 auf, wodurch das Akkupack 100 von einer Werkzeugmaschine gelöst werden kann (vgl. Fig.1). An der zweiten Längsseite 126 kann der Akkupack 100 ebenfalls eine Taste zum Betätigen des Verriegelungselements 124 aufweisen (nicht dargestellt).

Nachfolgend wird auf die Halteeinrichtung 10 eingegangen. Die Halteeinrichtung 10 weist eine Aufnahme 12 zum Halten einer Komponente, vorliegend eines Werkzeugs 14 für die Werkzeugmaschine auf (vgl. Fig.1 und 2).

Die Aufnahme 12 für das Werkzeug 14 erstreckt sich entlang einer Längsrichtung 16. Bei dem Werkzeug 14 handelt es sich im Beispiel um ein längliches Schraubwerkzeug in Form eines Schraubeinsatzes (Bit).

Die Aufnahme 12 ist im Beispiel als Haltenut 13 ausgebildet, deren Nutquerschnitt (Werkzeugaufnahmeraum) durch einen Nutgrund 18 sowie durch zwei seitliche (den Nutgrund 18 zwischen sich einfassende) Wandungen 20, 22 begrenzt ist. Die Haltenut 13 ist an ihrer (vom Nutgrund 18 abgewandten) Außenseite 24 offen ausgebildet.

Der Nutquerschnitt der Haltenut 13 ist zur Aufnahme des Werkzeugs 14 (im Beispiel ein Schraubeinsatz) eingerichtet und bestimmt. Ist das Werkzeug 14 in der Haltenut 13 angeordnet, ragt dieses im Beispiel teilweise aus dem Nutquerschnitt heraus (Werkzeug 14 nur teilweise im Nutquerschnitt aufgenommen; vgl. Fig.2). Die Haltenut 13 ist im Beispiel mantelseitig am Akkupack 100 angeordnet, und zwar an einer Längsseite 120 des Akkupacks.

Die seitlichen Wandungen 20, 22 können elastisch verformbar ausgebildet sein, so dass diese beim Einbringen des Werkzeugs 14 in die Haltenut 13 durch das Werkzeug 14 elastisch verformt werden und das Werkzeug 14 in der Haltenut 13 halten. Somit kann das Werkzeug 14 durch die seitlichen Wandungen 20, 22 in der Haltenut 13 geklemmt sein.

Optional können an den seitlichen Wandungen Hintergriffsabschnitte, Schnapphaken oder Elastomerelemente angeordnet sein, wie oben beschrieben (nicht dargestellt).

Am Nutgrund 18 ist zumindest ein Permanentmagnet 30 angeordnet (vgl. Fig.2). Somit kann das Werkzeug 14, ggf. zusätzlich, mittels Magnetkraft gehalten werden. Am Nutgrund 18 kann ein einzelner Permanentmagnet 30 angeordnet sein, der sich entlang einer Längsrichtung 16 erstreckt, oder es können mehrere Permanentmagnete 30 vorgesehen sein, die sich entlang der Längsrichtung 16 erstrecken und entlang der Längsrichtung 16 ggf. voneinander beabstandet sind.

Im Beispiel bedeckt die Halteeinrichtung 10 den Akkupack 100 teilweise. So ist die Halteeinrichtung 10 als Teil eines Gehäuseabschnitts des Akkupacks 100 ausgebildet, im Beispiel als Teil des zweiten Gehäuseabschnitts 106.

Die Halteeinrichtung 10 ist fest mit dem Akkupack 100 verbunden. Im Beispiel ist die Halteeinrichtung 10 fest am Gehäuse 102 des Akkupacks 100, und zwar an zweiten Gehäuseabschnitt 106 befestigt.

In den Figuren 3 bis 5 ist eine Halteeinrichtung 10 gezeigt, die auf einen Akkupack 100 aufsetzbar ist. Der Akkupack 100 kann dem Akkupack 100 wie voranstehend beschrieben entsprechen.

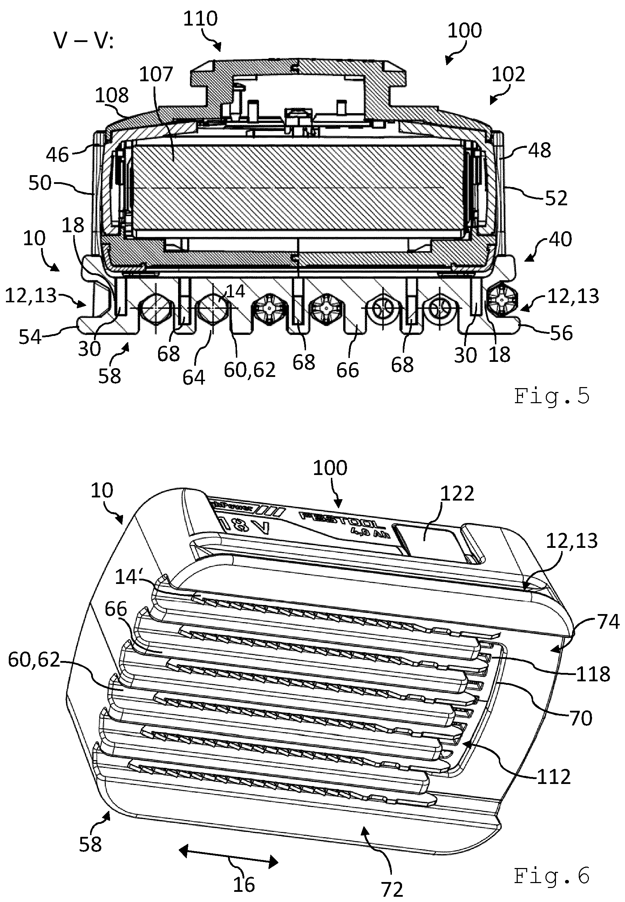

Die Halteeinrichtung 10 zur Anordnung am Akkupack 100 einer Werkzeugmaschine weist mehrere Aufnahmen 12 zum Halten einer Komponente, vorliegend eines Werkzeugs 14 für die Werkzeugmaschine auf (vgl. Fig.5).

Die Halteeinrichtung 10 ist auf den Akkupack 100 aufsetzbar und reversibel vom Akkupack 100 abnehmbar ausgebildet, wobei die Halteeinrichtung 10 den Akkupack 100 im aufgesetzten Zustand zumindest teilweise umgibt (vgl. Fig.3). Die Halteeinrichtung 10 ist somit separat zum Akkupack 100 ausgebildet und kann bei Bedarf auf den Akkupack 100 aufgesetzt oder von diesem abgenommen werden.

Die Halteeinrichtung 10 weist einen Basisabschnitt 40 und vom Basisabschnitt 40 abragende Wandabschnitte 42, 44, 46, 48 auf, und zwar stirnseitige Wandabschnitte 42, 44 und längsseitige Wandabschnitte 46, 48, die die stirnseitigen Wandabschnitte 42, 44 miteinander verbinden (vgl. Fig.3). Somit kann der Akkupack 100 an der von der Kupplungsseite 108 abgewandten Seite 116 (Unterseite 116) und an Mantelseiten, bspw. der Längsseite 120, geschützt werden.

An den längsseitigen Wandabschnitten 46, 48 ist jeweils eine Aussparung 50, 52 ausgebildet (vgl. Fig.3 und 5). Dadurch werden die Taste 122 und bspw. auch eine Beschriftungsfläche freigegeben.

Im Beispiel ist an beiden Längsseiten 54, 56 der Halteeinrichtung 10, und zwar am Basisabschnitt 40, jeweils eine (längsseitige) Aufnahme 12 zum Halten einer Komponente, vorliegend eines Werkzeugs 14 ausgebildet (vgl. Fig.5).

Die Aufnahme 12 für das Werkzeug 14 erstreckt sich jeweils entlang einer Längsrichtung 16. Bei dem Werkzeug 14 handelt es sich um ein längliches Schraubwerkzeug in Form eines Schraubeinsatzes (Bit).

Die Aufnahme 12 ist im Beispiel jeweils als Haltenut 13 ausgebildet, deren Nutquerschnitt (Werkzeugaufnahmeraum) durch einen Nutgrund 18 sowie durch zwei seitliche Wandungen 20, 22 begrenzt ist (vgl. Fig.3 und 5). Die Haltenut 13 ist an ihrer (vom Nutgrund 18 abgewandten) Außenseite 24 offen ausgebildet. An beiden Enden der Aufnahme 12 bzw. der Haltenut 13 ist jeweils ein ansteigender Abschnitt 15, 17 ausgebildet, in dem die Tiefe der Aufnahme 12 bzw. der Haltenut 13 abnimmt. Dies erleichtert die Entnahme des Werkzeugs 14, wie oben erläutert.

Der Nutquerschnitt der Haltenut 13 ist jeweils zur Aufnahme des Werkzeugs 14 (Schraubeinsatz) eingerichtet und bestimmt. Ist das Werkzeug 14 in der Haltenut 13 angeordnet, ist dieses bündig zur Längsseite 54, 56 angeordnet (Werkzeug 14 ragt nicht oder nur unwesentlich aus dem Nutquerschnitt heraus; vgl. Fig.5).

Die seitlichen Wandungen 20, 22 können elastisch verformbar ausgebildet sein, so dass diese beim Einbringen des Werkzeugs 14 in die Haltenut 13 durch das Werkzeug 14 elastisch verformt werden und das Werkzeug 14 in der Haltenut 13 halten. Somit kann das Werkzeug 14 durch die seitlichen Wandungen 20, 22 in der Haltenut 13 geklemmt sein.

Optional können an den seitlichen Wandungen 20, 22 Hintergriffsabschnitte, Schnapphaken oder Elastomerelemente angeordnet sein, wie oben beschrieben (nicht dargestellt).

Angrenzend an den Nutgrund 18, d.h**.** im Inneren des Basisabschnitts 40, ist jeweils mindestens ein Permanentmagnet 30 angeordnet (vgl. Fig.5). Somit kann das Werkzeug 14, ggf. zusätzlich, mittels Magnetkraft gehalten werden. Es kann ein einzelner Permanentmagnet 30 vorgesehen sein, der sich entlang einer Längsrichtung 16 erstreckt, oder es können mehrere Permanentmagnete 30 vorgesehen sein, die sich entlang der Längsrichtung 16 erstrecken und entlang der Längsrichtung 16 ggf. voneinander beabstandet sind.

Im Beispiel sind an einer Unterseite 58 der Halteeinrichtung 10 bzw. des Basisabschnitts 40 mehrere Aufnahmen 60 zum Halten eines Werkzeugs 14 ausgebildet (vgl. Fig.3 bis 5). Die Aufnahmen 60 sind jeweils als Haltenut 62 ausgebildet. Der Nutquerschnitt ist im Beispiel derart dimensioniert, dass das Werkzeug 14 vollständig innerhalb des Nutquerschnitts angeordnet ist, wobei zwischen dem Werkzeug 14 und der Unterseite 58 ein Freiraum 64 verbleibt (vgl. Fig.5). Im Beispiel sind die Aufnahmen 60 bzw. die Haltenuten 62 dazu eingerichtet und bestimmt, um jeweils ein Werkzeug 14 in Form eines Schraubeinsatzes aufzunehmen.

Die Aufnahmen 60 an der Unterseite 58 erstrecken sich jeweils entlang der Längsrichtung 16 und sind parallel zueinander angeordnet (vgl. Fig.4 und 5). Zueinander benachbarte Aufnahmen 60 sind jeweils durch eine Trennwand 66 voneinander getrennt.

Im Beispiel sind in jeder zweiten Trennwand 66 jeweils ein oder mehrere Permanentmagnete 68 angeordnet (vgl. Fig.5). In einer Trennwand 66 können jeweils ein (langer) Permanentmagnet oder mehrere (kürzere) Permanentmagnete angeordnet sein, die entlang einer Längsrichtung der Trennwand 66 voneinander beabstandet sind.

An einer Seite, im Beispiel an der Unterseite 58 der Halteeinrichtung 10 bzw. im Basisabschnitt 40, ist ein Durchbruch 70 zur Belüftung des Akkupacks 100 ausgebildet (vgl. Fig.4). Der Durchbruch 70 ist an den Querschnitt eines im Akkupack 100 ausgebildeten Belüftungskanals 112 angepasst.

Die Aufnahmen 60 an der Unterseite 58 erstrecken sich entlang der Längsrichtung 16 nur über einen Teil 72 der Halteeinrichtung 10 bzw. des Basisabschnitts 40, wobei der Durchbruch 70 außerhalb dieses Teils 72 angeordnet ist. So ist der Durchbruch 70 in einem nicht mit Aufnahmen 60 versehenen Teil 74 der Halteeinrichtung 10 bzw. des Basisabschnitts 40 angeordnet.

Wie oben beschrieben kann die Halteeinrichtung 10 aus einem Elastomer, insbesondere aus einem thermoplastischen Elastomer, ausgebildet sein. Die Halteeinrichtung 10 kann eine rutschhemmende Oberfläche oder einen Überzug aus einem rutschhemmenden Material aufweisen, bspw. aus Gummi. Die Halteeinrichtung 10 kann einen Überzug aus einem weichen Material, insbesondere einen Überzug aus Gummi, aufweisen.

Wie oben beschrieben, kann die Halteeinrichtung 10 eine Lichtquelle und/oder einen Leitungssucher aufweisen (nicht dargestellt). Wie oben beschrieben, kann die Halteeinrichtung 10 eine Ladeeinrichtung zum elektrischen Laden von mobilen Endgeräten und/oder eine Kupplungseinrichtung zur Ankopplung von Haltemitteln aufweisen.

Figur 6 zeigt eine Ausgestaltung der Halteeinrichtung 10, die weitestgehend der in den Figuren 3 bis 5 beschriebenen Ausgestaltung entspricht.

Abweichend davon sind in den Aufnahmen 60 an der Unterseite 58 der Halteeinrichtung 10 bzw. des Basisabschnitts 40 Werkzeuge 14' in Form von Stichsägeblättern aufgenommen. Die Stichsägeblätter können mittels der in den Trennwänden 66 angeordneten Permanentmagnete 68 durch Magnetkraft gehalten werden (analog zu Fig.5).

Die Aufnahmen 60 können jeweils als Haltenuten 62 ausgebildet und zur Aufnahme eines Schraubwerkzeugs ausgebildet sein. Damit können als Werkzeuge nicht nur Stichsägeblätter, sondern bspw. auch Schraub- oder Bohrwerkzeuge in den Aufnahmen 60 gehalten werden.

Optional können die Aufnahmen 60 im Querschnitt an die Stichsägeblätter angepasst sein. So können die Aufnahmen 60 jeweils entlang eines Teils der Höhe der Aufnahme 60 oder über die gesamte Höhe der Aufnahme 60 den Querschnitt eines Stichsägeblatts aufweisen (nicht dargestellt).

## Patentansprüche

1. Halteeinrichtung (10) zur Anordnung an einem Akkupack (100) einer Werkzeugmaschine, mit mindestens einer Aufnahme (12, 60) zum Halten eines Werkzeugs (14), Zubehörteils oder Verbrauchsmittels für die Werkzeugmaschine
wobei die Halteeinrichtung (10) auf den Akkupack (100) aufsetzbar und reversibel vom Akkupack (100) abnehmbar ist,
wobei die Halteeinrichtung (10) einen Basisabschnitt (40) und vom Basisabschnitt (40) abragende Wandabschnitte (42, 44, 46, 48) aufweist, wobei die Halteeinrichtung (10) dazu ausgebildet ist, den Akkupack (100) im aufgesetzten Zustand zumindest teilweise zu umgeben, und
**dadurch gekennzeichnet, dass**
die Halteeinrichtung (10) teilweise oder vollständig aus einem Elastomer ausgebildet ist und/oder die Halteeinrichtung (10) einen Überzug aus einem weichen Material aufweist.

2. Halteeinrichtung (10) nach Anspruch 1, **dadurch gekennzeichnet, dass** die Aufnahme (12, 60) als Haltenut (13, 62) oder als Aufnahmekanal ausgebildet istwobei der Nutquerschnitt der Haltenut (13, 62) durch einen Nutgrund (18) sowie durch mindestens eine seitliche Wandung (20, 22, 66) begrenzt ist.

3. Halteeinrichtung (10) nach Anspruch 2, **dadurch gekennzeichnet, dass** am Nutgrund (18), im Nutgrund (18) oder angrenzend an den Nutgrund (18) und/oder an den seitlichen Wandungen (20, 22, 66) jeweils ein oder mehrere Permanentmagnete (30, 68) angeordnet sind.

4. Halteeinrichtung (10) nach einem der voranstehenden Ansprüche, **dadurch gekennzeichnet, dass** die Halteeinrichtung (10) das Akkupack (100) zumindest teilweise bedeckt und/oder in das Akkupack (100) integriert ist.

5. Halteeinrichtung (10) nach einem der vorhergehenden Ansprüche, **dadurch gekennzeichnet, dass** die Wandabschnitte (42, 44, 46, 48) stirnseitige Wandabschnitte (42, 44) und längsseitige Wandabschnitte (46, 48) umfassen, die die stirnseitigen Wandabschnitte (42, 44) miteinander verbinden.

6. Halteeinrichtung (10) nach einem der vorhergehenden Ansprüche , **dadurch gekennzeichnet, dass** an einer Längsseite (54, 56) oder an beiden Längsseiten (54, 56) der Halteeinrichtung (10) jeweils eine Aufnahme (12) zum Halten eines Werkzeugs (14), Zubehörteils oder Verbrauchsmittels ausgebildet ist.

7. Halteeinrichtung (10) nach einem der vorhergehenden Ansprüche, **dadurch gekennzeichnet, dass** an einer Unterseite (58) der Halteeinrichtung (10) mehrere Aufnahmen (60) zum Halten eines Werkzeugs, Zubehörteils oder Verbrauchsmittels ausgebildet sind, wobei zueinander benachbarte Aufnahmen (60) durch eine Trennwand (66) voneinander getrennt sind.

8. Halteeinrichtung (10) nach dem voranstehenden Anspruch, **dadurch gekennzeichnet, dass** die Aufnahmen (60) an der Unterseite (58) unterschiedlich große Querschnitte und/oder unterschiedliche Formen aufweisen.

9. Halteeinrichtung (10) nach einem der vorhergehenden Ansprüche, **dadurch gekennzeichnet, dass** an der Halteeinrichtung (10) ein Durchbruch (70) zur Belüftung des Akkupacks (100) ausgebildet ist.

10. Halteeinrichtung (10) nach Anspruch 7 oder 8 sowie nach Anspruch 9, **dadurch gekennzeichnet, dass** sich die Aufnahmen (60) an der Unterseite (58) entlang der Längsrichtung (16) nur über einen Teil (72) der Halteeinrichtung (10) bzw. des Basisabschnitts (40) erstrecken, wobei der Durchbruch (70) außerhalb dieses Teils (72) angeordnet ist.

11. Halteeinrichtung (10) nach einem der voranstehende Ansprüche, **dadurch gekennzeichnet, dass** die Halteeinrichtung (10) aus einer Hartkomponente und einer Weichkomponente ausgebildet ist, wobei die Weichkomponente die Hartkomponente zumindest teilweise umgibt und/oder dass die Oberfläche der Halteeinrichtung (10) rutschhemmend ist oder dass die Halteeinrichtung (10) einen Überzug aus einem rutschhemmenden Material aufweist.

12. Halteeinrichtung (10) nach einem der voranstehenden Ansprüche, **dadurch gekennzeichnet, dass** die Halteeinrichtung (10) eine Lichtquelle aufweist, dass die Halteeinrichtung (10) einen Leitungssucher aufweist, dass die Halteeinrichtung (10) eine Ladeeinrichtung zum elektrischen Laden von mobilen Endgeräten aufweist und/oder dass die Halteeinrichtung (10) eine Kupplungseinrichtung zur Ankopplung von Haltemitteln aufweist.

13. Akkupack (100) mit einer Halteeinrichtung (10) nach einem der voranstehenden Ansprüche.

14. Werkzeugmaschine, mit einem Akkupack (100) und einer Halteeinrichtung (10) nach einem der Ansprüche 1 bis 12.

## Claims

1. Holding device (10) for arrangement on a battery pack (100) of a machine tool, having at least one holder (12, 60) for holding a tool (14), accessory or consumable for the machine tool
wherein the holding device (10) can be placed onto the battery pack (100) and reversibly removed from the battery pack (100),
wherein the holding device (10) has a base section (40) and wall sections (42, 44, 46, 48) protruding from the base section (40), wherein the holding device (10) is designed to at least partially surround the battery pack (100) when fitted, and **characterised in that**
the holding device (10) is formed in part or whole from an elastomer and/or the holding device (10) has a coating made of a soft material.

2. Holding device (10) according to claim 1, **characterised in that** the holder (12, 60) is formed as a holding groove (13, 62) or as a receiving channel, wherein the groove cross-section of the holding groove (13, 62) is delimited by a groove base (18) and by at least one lateral wall (20, 22, 66).

3. Holding device (10) according to claim 2, **characterised in that** one or more permanent magnets (30, 68) are respectively arranged on the groove base (18), in the groove base (18) or adjacent to the groove base (18) and/or on the lateral walls (20, 22, 66).

4. Holding device (10) according to one of the preceding claims, **characterised in that** the holding device (10) at least partially covers the battery pack (100) and/or is integrated into the battery pack (100).

5. Holding device (10) according to one of the preceding claims, **characterised in that** the wall sections (42, 44, 46, 48) comprise end-face wall sections (42, 44) and longitudinal wall sections (46, 48), which connect the end-face wall sections (42, 44) to one another.

6. Holding device (10) according to one of the preceding claims, **characterised in that** a holder (12) is respectively formed on one longitudinal side (54, 56) or on both longitudinal sides (54, 56) of the holding device (10) for holding a tool (14), accessory or consumable.

7. Holding device (10) according to one of the preceding claims, **characterised in that** a plurality of holders (60) are formed on a lower side (58) of the holding device (10) for holding a tool (14), accessory or consumable,
wherein adjacent holders (60) are separated from one another by a partition (66).

8. Holding device (10) according to the preceding claim, **characterised in that** the holders (60) on the lower side (58) have cross-sections of different sizes and/or different shapes.

9. Holding device (10) according to one of the preceding claims, **characterised in that** an opening (70) is formed on the holding device (10) for ventilating the battery pack (100) .

10. Holding device (10) according to claim 7 or 8 and according to claim 9, **characterised in that** the holders (60) on the lower side (58) extend along the longitudinal direction (16) only over part (72) of the holding device (10) or base section (40), wherein the opening (70) is arranged outside of this part (72).

11. Holding device (10) according to one of the preceding claims, **characterised in that** the holding device (10) is formed from a hard component and a soft component, wherein the soft component at least partially surrounds the hard component and/or **in that** the surface of the holding device (10) is slip-resistant or **in that** the holding device (10) has a coating made of a slip-resistant material.

12. Holding device (10) according to one of the preceding claims, **characterised in that** the holding device (10) has a light source, **in that** the holding device (10) has a cable finder, **in that** the holding device (10) has a charging device for electrically charging mobile devices and/or **in that** the holding device (10) has a coupling device for coupling holding means.

13. Battery pack (100) having a holding device (10) according to one of the preceding claims.

14. Machine tool, having a battery pack (100) and a holding device (10) according to one of claims 1 to 12**.**

## Revendications

1. Dispositif de retenue (10) destiné à être disposé sur un bloc-batterie (100) d'une machine-outil, comportant au moins un logement (12, 60) destiné à maintenir un outil (14), un accessoire ou un consommable pour la machine-outil dans lequel le dispositif de retenue (10) peut être placé sur le bloc-batterie (100) et peut être retiré du bloc-batterie (100) de façon réversible,
dans lequel le dispositif de retenue (10) comporte une portion de base (40) et des portions de paroi (42, 44, 46, 48) qui font saillie à partir de la portion de base (40), dans lequel le dispositif de retenue (10) est conçu pour entourer au moins partiellement le bloc-batterie (100) à l'état monté, et **caractérisé en ce**
**que** le dispositif de retenue (10) est partiellement ou entièrement formé à partir d'un élastomère et/ou le dispositif de retenue (10) comporte un revêtement constitué d'un matériau souple.

2. Dispositif de retenue (10) selon la revendication 1, **caractérisé en ce que** le logement (12, 60) est réalisé sous la forme d'une rainure de retenue (13, 62) ou d'un canal de réception, dans lequel la section transversale de rainure de la rainure de retenue (13, 62) est délimitée par un fond de rainure (18) ainsi que par au moins une paroi latérale (20, 22, 66).

3. Dispositif de retenue (10) selon la revendication 2, **caractérisé en ce qu'**un ou plusieurs aimants permanents (30, 68) sont respectivement agencés sur le fond de rainure (18), dans le fond de rainure (18) ou adjacents au fond de rainure (18) et/ou sur les parois latérales (20, 22, 66).

4. Dispositif de retenue (10) selon l'une des revendications précédentes, **caractérisé en ce que** le dispositif de retenue (10) recouvre au moins partiellement le bloc-batterie (100) et/ou est intégré dans le bloc-batterie (100).

5. Dispositif de retenue (10) selon l'une des revendications précédentes, **caractérisé en ce que** les portions de paroi (42, 44, 46, 48) comprennent des portions de paroi d'extrémité (42, 44) et des portions de paroi longitudinales (46, 48) qui relient les portions de paroi d'extrémité (42, 44) l'une à l'autre.

6. Dispositif de retenue (10) selon l'une des revendications précédentes, **caractérisé en ce qu'**un logement (12) destiné à maintenir un outil (14), un accessoire ou un consommable est respectivement formé sur un côté longitudinal (54, 56) ou sur les deux côtés longitudinaux (54, 56) du dispositif de retenue (10).

7. Dispositif de retenue (10) selon l'une des revendications précédentes, **caractérisé en ce que** plusieurs logements (60) destinés à maintenir un outil, un accessoire ou un consommable sont formés sur une face inférieure (58) du dispositif de retenue (10),
dans lequel des logements (60) adjacents les uns aux autres sont séparés les uns des autres par une paroi de séparation (66) .

8. Dispositif de retenue (10) selon la revendication précédente, **caractérisé en ce que** les logements (60) sur la face inférieure (58) présentent des sections transversales de différente taille et/ou différentes formes.

9. Dispositif de retenue (10) selon l'une des revendications précédentes, **caractérisé en ce qu'**une ouverture (70) est formée sur le dispositif de retenue (10) pour la ventilation du bloc-batterie (100).

10. Dispositif de retenue (10) selon la revendication 7 ou 8 ainsi que selon la revendication 9, **caractérisé en ce que** les logements (60) sur la face inférieure (58) s'étendent le long de la direction longitudinale (16) uniquement sur une portion (72) du dispositif de retenue (10) ou de la portion de base (40), dans lequel la ouverture (70) est agencée à l'extérieur de cette portion (72).

11. Dispositif de retenue (10) selon l'une des revendications précédentes, **caractérisé en ce que** le dispositif de retenue (10) est formé à partir d'un composant dur et d'un composant souple, dans lequel le composant souple entoure au moins partiellement le composant dur et/ou la surface du dispositif de retenue (10) est antidérapante ou **en ce que** le dispositif de retenue (10) comporte un revêtement constitué d'un matériau antidérapant.

12. Dispositif de retenue (10) selon l'une des revendications précédentes, **caractérisé en ce que** le dispositif de retenue (10) comporte une source lumineuse, **en ce que** le dispositif de retenue (10) comporte un localisateur de fil, **en ce que** le dispositif de retenue (10) comporte un dispositif de charge pour la charge électrique de terminaux mobiles et/ou **en ce que** le dispositif de retenue (10) comporte un dispositif de couplage pour coupler des moyens de retenue.

13. Bloc-batterie (100) comportant un dispositif de retenue (10) selon l'une des revendications précédentes.

14. Machine-outil comportant un bloc-batterie (100) et un dispositif de retenue (10) selon l'une des revendications 1 à 12.
